# EUROPEAN PATENT APPLICATION

(11) **EP 2 068 267 A1**
(43) Date of publication of application: **10.06.2009**
(21) Application number: 08016129.2
(22) Date of filing: 12.09.2008
(51) Int. Cl.: G06K 7/00, G06K 17/00, B41J 3/51, B41J 3/50

(54) **Radio communication device and its control method**

(30) Priority: 06.12.2007 JP 2007316208
(71) Applicant: Toshiba TEC Kabushiki Kaisha, Tokyo 141-8664 (JP)
(72) Inventor: Suzuki, Shigeaki, Shinagawa-ku, Tokyo 141-8664 (JP)
(74) Representative: Kramer - Barske - Schmidtchen

(57) **Abstract**

A radio communication device detects a reception sensitivity in receiving tag identification information to be responded from radio tags (ST7). The device determines whether or not the detected reception sensitivity is not lower than a preset threshold (ST8). The device makes the radio tags, of which the reception sensitivity in receiving tag identification information is not lower than the threshold, effective to perform prescribed processing (ST9).

## Description

The present invention relates to a radio communication device which performs radio communication with a radio tag configured to write and read data by using a radio wave, and its control method.

A radio communication device is configured to include an antenna and perform radio communication using radio waves with radio tags existing in a communication range of the antenna has been developed. This kind of radio communication device is configured to read data from memories on the radio tags and write the data to the memories.

A proper ID is stored in each memory of each radio tag as tag identification information. The radio communication device reads the IDs of the radio tags to individually specify the radio tags. Such a radio tag is referred to, for example, as a radio-frequency identification (RFID) tag.

When writing the data in the radio tags by using this kind radio communication device, the radio communication device does not specify the radio tags and firstly transmits an interrogation radio wave without specifying the radio tag. The radio tags which have received the interrogation radio wave then return response waves. The response radio waves have been modulated by the IDs each stored in the memories of the radio tags. The response radio waves from the radio tags are received by the radio communication device. The radio communication device demodulates the received response radio waves to recognize the IDs of the radio tags. When recognizing the IDs, the radio communication device performs radio communication one by one with the radio tags having those recognized IDs to read and write the data in a noncontact manner. For instance, a radio tag label issuing device using this kind of radio communication device is disclosed in Jpn. Pat. Appln. KOKAI publication No. 2006-338179. The issuing device is mainly composed of a label supply means, a radio communication device, a print means and a control means. The label supply means derives a label sheet is winded in a roll shape from a tip. The derived label sheet is supplied within the antenna communication range, and further, between a print head and a platen of a print means of the radio communication device.

A plurality of radio tag labels are stuck at equal intervals in a line on the label sheet. The radio communication device performs radio communication with the radio tags of the radio tag labels fed into the antenna communication range to write necessary information in the memories of the radio tags. The print means prints necessary information on the surface of the radio tag labels supplied between the print head and the platen. The control means controls the label supply means, radio communication device and print means so as to secure the consistency between the information to be written in the radio tag of a sheet of radio tag label and the information to be printed on the surface of the tag label.

When the radio communication device writes the data in the radio tag by using radio communication, a certain level of transmission power is required. Therefore, the antenna communication range of the communication device is set larger beyond necessity.

A radio communication device in which the label supply means supplies targeted radio tags in turn in the antenna communication area to write necessary data in the radio tags has been proposed. Such a radio communication device has problems in that, depending upon the intervals at which the labels are arranged, the targeted radio tag closest to the antenna may not be the only radio tag that responds to the interrogation radio wave emitted from the antenna. In other words, a non-targeted radio tag located in the neighborhood of the targeted radio tag may be the first radio tag that responds to the interrogation radio wave.

However, the conventional radio communication device cannot determine whether the radio tag which has responded firstly is the targeted radio tag or the radio tag other than the targeted radio tag.
Therefore, if the non-targeted radio tag has firstly responded, the data is written in the non-targeted radio tag. As a result, there is a possibility that a radio tag, in which the information written in the radio tag and the information printed on a label surface do not much, is issued.

The present invention has been made in consideration of the above, and an object of the invention is to provide a radio communication device configured to precisely select radio tags to be processed and radio tags not to be processed.

According to an aspect of the invention, there is provided a control method of a radio communication device, comprising: detecting a reception sensitivity in receiving tag identification information to be responded from radio tags; determining whether or not the detected reception sensitivity is larger than a prescribed threshold; and performing prescribed processing by making a radio tag, of which the reception sensitivity in receiving the tag identification information is determined to be larger than the threshold, as effective.

The invention can be more fully understood from the following detailed description when taken in conjunction with the accompanying drawings, in which:
FIG. 1 is a schematic view depicting a principal configuration of radio tag label paper to be used in an embodiment of the invention;
FIG. 2 is a cross-sectional view taken on arrowed line A-A in FIG. 1;

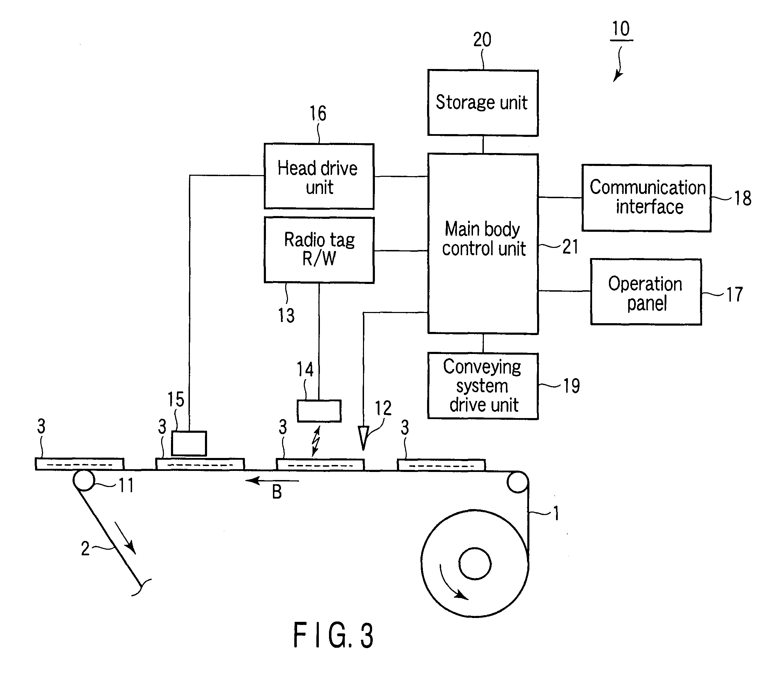

FIG. 3 is a block diagram depicting a principal configuration of a radio tag label issuing device;
FIG. 4 is a block diagram depicting a principal configuration of a radio tag reader/writer provided for the radio tag label issuing device;
FIG. 5 is a view depicting a principal memory area to be formed in a storage unit of the radio tag reader/writer;
FIG. 6 is a flowchart depicting a processing procedure before the end of one cycle to be executed by a control unit of the radio reader/writer;
FIG. 7 is a flowchart depicting a processing procedure after the end of one cycle to be executed by the control unit of the radio reader/writer; and
FIG. 8 is a view depicting an example of data to be set in a threshold table.

Hereinafter, an optimum embodiment in order to implement the invention will be described with reference to the drawings.

The optimum embodiment shows the case that the invention is applied to a radio tag reader/writer of a radio tag label issuing device. The issuing device issues radio tag labels to be stuck to various articles as article management labels.

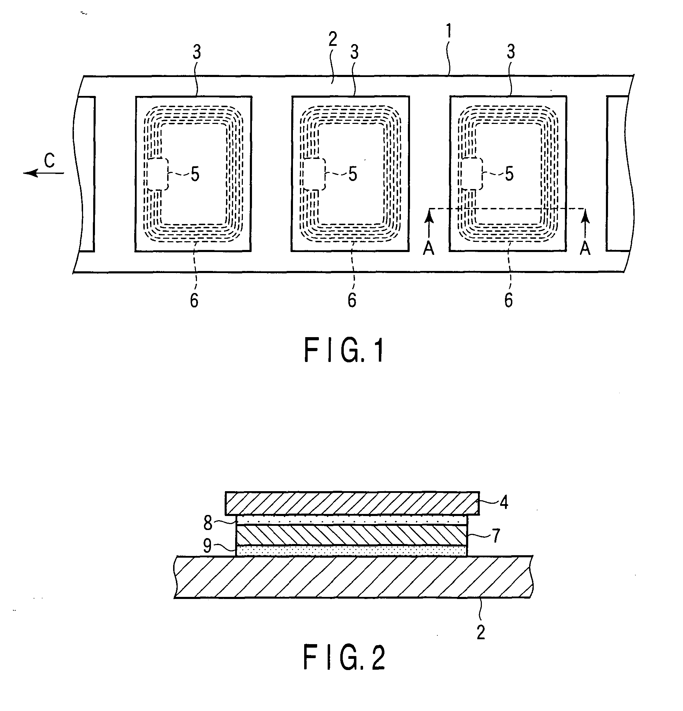

At first, a radio tag label sheet 1 to be used in the embodiment will be described by referring to FIGS. 1 and 2. The label sheet 1, as shown in FIG. 1, is composed of a band-like mounting sheet 2 and a large number of radio tag labels 3. Each tag label 3 is stuck to the surface of the mounting sheet 2 so as to be linearly arranged in a sheet conveying direction C in a manner so that the tag labels 3 are freely stuck and peeled off.

A cross-sectional view taken on arrowed line A-A of FIG. 1 is expanded to be shown in FIG. 2. Each radio tag label 3, as shown in FIG. 2, is structured in which a radio tag 7 is each stuck to a mounting sheet 2 through an adhesive 9 and the radio tag 7 is covered with a label sheet 4 through an adhesive 8. The adhesive 8 has fully stronger adhesive force than that of the adhesive 9. Thereby, the label sheet 4 and the radio tag 7 are peeled off from the mounting sheet 2 as one. The surface of the label sheet 4 becomes a print face for information.

The radio tag 7 has built-in IC chip 5 and antenna 6 in a thin film. This kind of radio tag 7 is referred to as an RFID inlet generally.

The IC chip 5 of the radio tag 7 includes a power source generation unit, a demodulation unit, a modulation unit, a memory unit and a control unit which controls these units. The power source generation unit rectifies and stabilizes the radio wave received by the antenna and supplies the generated power source to each unit of the IC chip 5. The demodulation unit demodulates the radio wave received by the antenna 6 and sends the radio wave to the control unit. The modulation unit modulates the data sent from the control unit onto a radio wave to be emitted from the antenna 6.

The control unit writes the data demodulated by the demodulation unit in the memory unit. The memory unit reads the data from the memory unit to transmit the data to the modulation unit. The memory unit is composed of a setting area which stores and holds the data in a non-rewritable manner and a user area which may write arbitrary data. An ID, which is proper tag identification information, is written in advance in the setting area.

The following will describe a radio tag label issuing device 10 which uses the radio tag label sheet 1.

The issuing device 10 includes a label holder (not shown). The label sheet 1 is set in the label holder in a state that the label sheet 1 is winded in a roll shape. The tip of the label sheet 1 which is let out from the label holder is introduced to a peel off roller 11 along with a prescribed conveying path. The mounting sheet 2 is solely winded by the peel off roller 11 to peel off the tag label 3. The tag label 3 which is peeled off by the roller 11 is discharged from a label issuing port (not shown). The mounting sheet 2 winding around the roller 11 is reeled off with a reel off roller (not shown).

A label sensor 12, an antenna 14 of a radio tag reader/writer 13 and a print head 15 are arranged in turn from an upstream side in a conveying direction B of the label sheet 1, namely from the side of the label holder toward a downstream side, namely the side of the roller 11 on a conveying path from the label holder up to the roller 11.

The label sensor 12 detects the tag label 3 of the label sheet 1 which has been let out from the label holder. For instance, the label sensor 12 detects the tag label 3 by optically detecting a rear end edge of the tag label 3.

The antenna 14 emits a radio wave in accordance with the control by the reader/writer 13. The antenna 14 receives the radio wave emitted from the radio tag 7 of the tag label 3. The reader/writer 13 may read the memory data in a non-contact manner from the radio tag 7 of the tag label 3 existing within a radio wave reachable range in which the radio wave to be emitted from the antenna 14 can be reached. The reader/writer 13 may write the data to the memory unit of the radio tag 7 in a non-contact manner.

The print head 15 is driven by a head drive unit 16. The driven print head 15 prints a variety of items of information on a print face of the label sheet 4 that is the surface of the tag label 3. As regards this kind of print head 15, for example, a thermal head can be used.

The issuing device 10 further includes an operation panel 17, a communication interface 18, a conveying system drive unit 19, a storage unit 20, a main body control unit 21, or the like. The operation panel 17 is provided with various keys, a display unit, etc. A host device such as a personal computer is connected to the interface 18.

The drive unit 19 controls a conveying mechanism of the label sheet 1 and a drive mechanism of a winding roller. The conveying mechanism conveys the label sheet 1 set in the label holder in one direction of a length direction and in its opposite direction.

The storage unit 20 stores label writing data and label print data which have been input through the interface 18. The main body control unit 21 controls the conveying system drive unit 19, the radio tag reader/writer 13, and the head drive unit 16. The control writes the label writing data in the radio tag 7 and also issues the tag label 3 in which the label print data is printed on the print face.

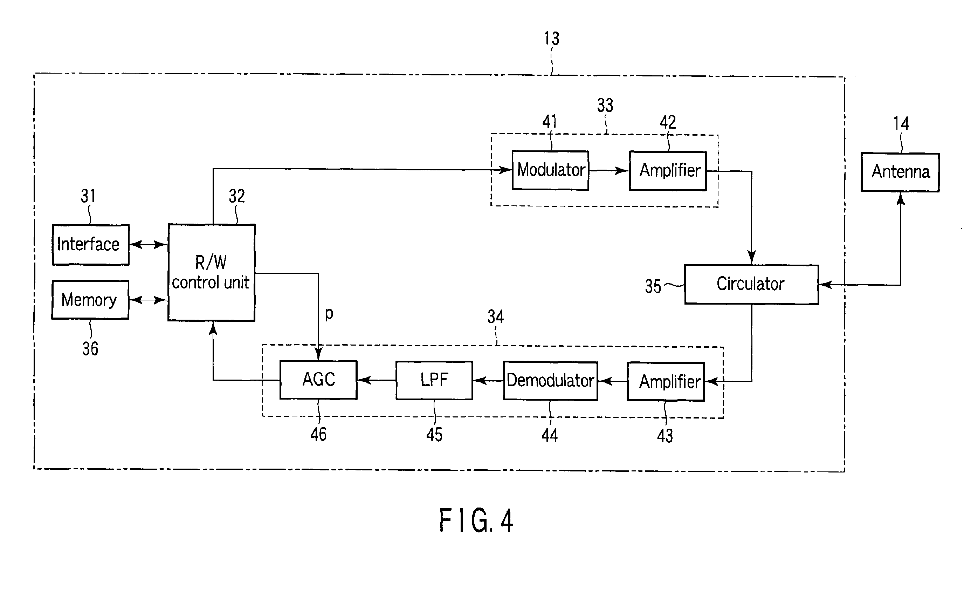

FIG. 4 shows a block diagram illustrating a principal configuration of a radio tag reader/writer 13. The reader/writer 13 includes an interface 31, a reader/writer control unit 32, a transmission processor 33, a reception processor 34, a circulator 35 and a memory 36.

The transmission processor 33 consists of a modulator 41 which modulates a prescribed carrier wave by analog transmission data signal to be output from a control unit 32, and an amplifier 42 which amplifies the signal modulated by the modulator 41. The signal amplified by the amplifier 42 is supplied to the antenna 14 via the circulator 35 to be emitted from the antenna 14 as a radio wave.

The circulator 35 outputs the signal input from the side of the transmission processor 33 to the antenna 14, and outputs the signal input from the side of the antenna 14 to the side of the reception processor 34. The antenna 14 supplies a signal corresponding to the radio wave received from the radio tag 7 which exists in its communication area to the circulator 35.

The reception processor 34 consists of an amplifier 43, a demodulator 44, a low pass filter (LPF) 45 and an automatic gain control (AGC) circuit 46. The amplifier 43 amplifies the signal input through the circulator 35. The demodulator 44 removes a prescribed carrier wave component from the signal amplified by the amplifier 43 to demodulate the analog reception data. The LPF 45 passes a signal of a prescribed low-frequency band among the reception data signal demodulated by the demodulator 44. The AGC circuit 46 adjusts a gain (amplification rate) so that an intensity level of the reception data signal passed through the LPF 45 becomes a fixed appropriate level. The reception data signal adjusted to the appropriate level by the AGC circuit 46 is supplied to the control unit 32.

The interface 31 controls data communication between the main body control unit 21 and the control unit 32.

The control unit 32 has a transmission function and a reception function. The transmission function generates a transmission data signal in response to a command from the control unit 21 connected via the interface 31 and supplies the transmission data signal to the transmission processor 33. The reception function converts the reception data signal supplied from the reception processor 34 into data which can be recognized by the control unit 21 and supplies the converted data signal to the control unit 21 via the interface 31.

The control unit 32 has a gain control function. The function generates an AGC parameter p so that the intensity level of the reception data signal supplied from the AGC circuit 46 can be appropriate. The higher the reception sensitivity is, the larger the value of the AGC parameter p becomes. In the embodiment, the AGC parameter p is set to seven stages of "0" to "6".

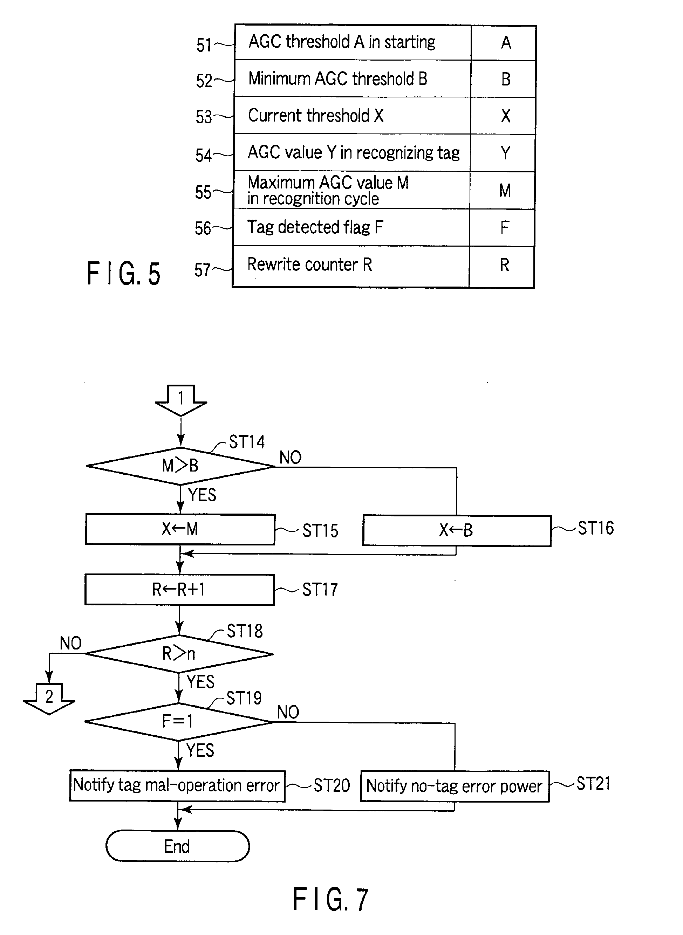

The memory 36 has a read-only ROM area and a freely readable and freely writable RAM area. A program, etc., which controls operations of the control unit 32 is stored in the ROM area. More specifically, as shown in FIG. 5, in the RAM area, each memory area 51 - 57 of an AGC threshold A in starting, a minimum AGC threshold B, a current threshold X, an AGC value Y in recognizing a tag, a maximum AGC value M in a recognition cycle, a tag detected flag F and a retry counter R are formed, respectively.

The AGC threshold A and the minimum AGC threshold B are set to arbitrary values (however, 6 ≧ A ≧ B ≧ 0) from the host device connected via the interface 18 in advance through the main body control unit 21. The memory area 52 of the minimum AGC threshold B composes a lower limit storage means.

When an issuing job of the radio tag label 3 is given from the host device, the control unit 21 stores the label writing data and the label print data included in the issuing job in the storage unit 20. Sequentially, the control unit 21 commands a start of the sheet conveying system drive unit 19. Thereby, since the conveying of the label sheet 1 is started, the control unit 21 stands by for the detection of the tag label 3 by the label sensor. When the tag label 3 has been detected, the control unit 21 commands the reader/writer 13 to write the label writing data.

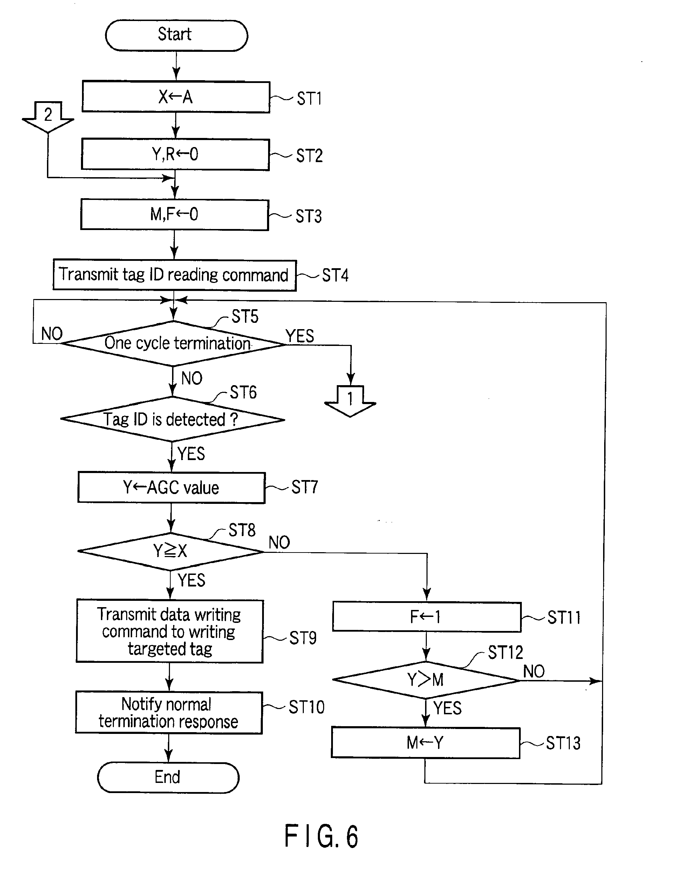

The control unit 32 of the reader/writer 13 which has received the command temporarily stores the label writing data in the storage unit 36 and then starts processing of procedures specifically shown in flowcharts of FIGS. 6 and 7.

The control unit 32 reads the AGC threshold A which has been set in the memory area 51 in Step ST1. The threshold A which has been read is set in the memory area 53 as the current threshold X.

The control unit 32 sets the AGC value Y in the memory area 54 to "0" in Step ST2, and resets the retry counter R in the memory area 57 to "0".

The control unit 32 sets the maximum AGC value M in the memory area 55 to "0" in Step ST3, and resets the tag detected flag F in the memory area 56 to "0".

After terminating the foregoing initializing processing, the control unit 32 outputs an ID read command of a radio tag in Step ST4.

When the ID read command is output, the transmission processor 33 modulates a carrier wave by the ID read command and generates a modulated signal. The modulated signal is amplified and emitted as an ID interrogation radio wave from the antenna 14.

The ID interrogation radio wave given above can be received by the unspecified number of radio tags 7. The radio tags 7 which have received the interrogation radio waves reply with ID response radio waves. The ID response radio waves have been modulated by the ID stored in the memories of the radio tags 7. The antenna 14 receives the ID response radio waves and transmits to the reception processor 34. The reception processor 34 amplifies the signals corresponding to the reception radio waves to be demodulated. The demodulated data signals include the IDs of the radio tags 7. The reception processor 34 further extracts signal components in the prescribed low-frequency band from the data signals, and the extracted low-frequency signals are supplied to the control unit 32 through the AGC circuit 46.

At this moment, the control unit 32 generates the AGC parameter p so that the intensity levels of the low-frequency signals supplied from the AGC circuit 46 are of an appropriate level. The control unit 32 supplies the AGC parameter p to the AGC circuit 46.

The control unit 32 which has transmitted the ID read command stands by for the elapse of one writing processing cycle time in Step ST5. During the stand by period, the control unit 32 determines whether or not the ID of the radio tag 7 has been detected in Step ST6.

Before the elapse of the one writing processing cycle time (NO, Step ST5), when detecting the ID of the radio tag from the low-frequency signal supplied through the AGC circuit 46 (YES, Step ST6), the control unit 32 obtains the current AGC parameter p in Step ST7. The control unit 32 stores the obtained AGC parameter p in the memory area 54 as the AGC value Y in recognizing the tag.

The control unit 32 compares the AGC value Y in the memory area 54 with the current threshold X in the memory area 53 in Step ST8. If the AGC value Y is not smaller than the current threshold value X, the reception sensitivity in detecting the ID of the radio tag 7 is not smaller than the prescribed level. That is, the radio tag 7 is positioned closest to the antenna 14. In this case, the control unit 32 recognizes the radio tag 7 to which the ID is set as the radio tag of a writing processing object in Step ST9. The control unit 32 reads the label writing data from the storage unit 48 to output the writing command of the writing data to the transmission processor 33.

When the writing command is output, the transmission processor 33 modulates the carrier wave by the writing command to generate the modulated signal. The modulated signal is amplified to be emitted from the antenna 14 as the writing processing radio wave.

The writing processing radio wave can be solely received by the radio tag 7 of the writing processing object with the relevant ID set thereto. The radio tag 7 which has received the writing processing radio wave writes the tag writing data in its memory. When the writing is terminated, the transmission processor 33 transmits a radio wave of a normal termination response. The response wave is received by the antenna 14 and be transmitted to the reception processor 34. The reception processor 34 amplifies and demodulates a signal corresponding to the reception radio wave. Further, the signal component of the prescribed low-frequency band is extracted from the demodulated data signal and the extracted low-frequency signal is supplied to the control unit 32 through the AGC circuit 46.

The control unit 32 which has transmitted the writing command stands by for the normal termination response from the radio tag 7. When receiving the normal termination response, the control unit 32 notifies the normal termination of the data writing processing to the control unit 21 through the interface 31. With that, the processing of this time terminates.

When receiving normal termination notification of the data writing processing from the radio tag reader/writer 13, the main body control unit 21 obtains the label print data from the storage unit 20. The control unit 21 supplies the label print data to the head drive unit 16 in synchronization with the conveying of the radio tag label 3 up to the print position of the print head 15. Thereby, the print head is operated, and the label print data is printed on the print face of the radio tag label 3. Thus, the radio tag label 3, in which the writing of the label writing data and the print of the label print data associated with the writing are performed, is peeled off from the mounting paper 2 by the peel off roller 11 and issued.

Conversely, as the result of comparison between the AGC value Y and the current threshold X in Step ST8 of FIG. 6, if the AGC value Y is smaller than the current threshold X, the reception sensitivity in detecting the ID of the radio tag 7 is less than the prescribed level. That is, the radio tag 7 is not positioned closest to the antenna 14. In this case, the control unit 32 sets the tag detected flag F to "1" in Step ST11. That is, the control unit 32 stores the fact that the ID of the radio tag 7 is detected in the writing processing cycle of this time. If the tag detected flag F has already been set to "1", the control unit 32 passes this processing.

The control unit 32 compares the AGC value Y in the memory area 54 with the maximum AGC value M in the memory area 55 in Step ST12. If the AGC value Y is larger than the maximum AGC value M, the control unit 32 overwrites the AGC value Y in the memory area 54 as a new maximum AGC value M in a recognition cycle into the memory area 55.

The control unit 32 returns to the processing in Step ST5 to stand by for the elapse of the one writing processing cycle time. During the stand by time, if the control unit 32 detects an ID of another radio tag 7 (YES, Step ST6), the control unit 32 executes again the processing in Step ST7 or later.

That is, the control unit 32 obtains the current AGC parameter p, stores the AGC parameter p as the AGC value Y in the memory area 54, and then, compares the AGC value Y with the current threshold value X. If the AGC value Y is not smaller than the current threshold X, the control unit 32 outputs the writing command of the label writing data to the radio tag that is the writing processing object.

Conversely, if the AGC value Y is smaller than the current threshold X, the control unit 32 compares the AGC value Y with the maximum AGC value M. If the AGC value Y is larger than the maximum AGC value M, the control unit 32 overwrites the AGC value Y as a new Maximum AGC value M in the recognition cycle into the memory area 55. After this, the control unit 32 stands by for the elapse of one writing processing cycle time.

Therefore, during the elapse of the writing processing cycle time, if the ID of the radio tag 7 has been detected under the condition where the AGC value Y comes to the current threshold value X or more, the data writing processing is immediately executed on the radio tag 7. After the writing processing, the processing of this time is terminated. Thus, even if IDs of the radio tags 7 have been detected continuously under the condition where the AGC value Y comes to the current threshold value X or more within the writing processing cycle time, those radio tags are neglected.

Conversely, if the writing processing cycle time has elapsed while the ID of the radio tag 7 has not been detected and under the condition where the AGC value Y comes to the current threshold X or more (YES, Step ST5), the control unit 32 advances to the process in step ST14 of FIG. 7.

In Step S14, the control unit 32 compares the maximum AGC value M in the memory area 55 with the minimum AGC threshold B in the memory area 52. If the maximum AGC value M is larger than the minimum AGC threshold B, the control unit 32 overwrites the maximum AGC value M into the memory area 53 in Step ST15 to update the current threshold value X. If the maximum AGC value M is not larger than the minimum AGC threshold value B, the control unit 32 overwrites the minimum AGC threshold value B into the memory area 53 to update the current threshold X.

The control unit 32 counts up the retry counter R by "1" in Step ST17. The control unit 32 determines whether or not the value counted by the retry counter R has exceeded the preset number n (n is a natural number 2 or more) of retry times in Step ST18. The value counted by the retry counter R has not exceeded the number n of retry times (NO, Step ST18), the control unit 32 returns to the processing in Step ST2. That is, the control unit 32 sets the maximum AGC value M to "0", and resets the tag detected flag F to "0". After this, the control unit 32 outputs the ID reading command of the radio tag again to the transmission processor 33.

Accordingly, if the ID of the radio tag 7 has not been detected and the writing processing cycle time has elapsed under the condition where the AGC value Y comes to the current threshold X or more, the current threshold value X is down-corrected to an AGC value corresponding to the maximum reception sensitivity in a just before writing processing cycle. After this, the interrogation of the ID is performed again. As a result, if the ID of the radio tag 7 is detected under the condition where the AGC value Y comes to the current threshold X or more, the writing processing of the data is immediately implemented to the radio tag 7. After the writing processing, the processing of this time is terminated.

Meanwhile, if the ID of the radio tag 7 has not been detected under the condition where the AGC value Y comes to the current threshold X or more, if the counted value by the retry counter R has exceeded the number n of retry times (YES, Step ST18), the control unit 32 checks the detected flag F in Step ST19. If the tag detected Flag F has been set to "1" (YES, Step 19), the ID of the radio tag 7 can be detected; however its reception sensitivity is low. In this case, the control unit 32 notifies abnormal termination of tag mal-error to the control unit 21 via the interface 31 in Step ST20. With that, the processing of this time is terminated.

If the tag detected flag F has not been set to "1" (NO, Step ST19), the IDs of the radio tags 7 have not been detected at all. In this case, the control unit 32 notifies the abnormal termination of the no-tag error to the control unit 21 via the interface 31 in Step ST21. With that, the processing of this time is terminated.

It is assumed that the AGC threshold A in starting has been set to "5", and the minimum AGC threshold B has been set to "2". As given above, the higher the reception sensitivity is, the larger the value of the AGC parameter p becomes. That is, in this example, if the AGC parameter p is "5" or larger in detecting the ID of the radio tag 7, the radio tag 7 is positioned closest to the antenna 14 as the writing object.

In this example, if the AGC parameter p in transmitting the ID interrogation radio wave from the antenna 14 and in detecting the ID of the radio tag 7 which has responded primarily is "5" or more, the data writing processing is performed for the radio tag 7. After this, regardless of whether or not AGC parameters p in detecting IDs of other radio tags are "5" or larger, the data writing processing is not performed to those radio tags 7.

If the AGC parameter p in detecting the ID of the radio tag 7 which has responded primarily is smaller than "5", the data writing processing is not executed to the radio tag 7. If the AGC parameter p in detecting an ID of a radio tag 7 which has responded next is "5" or larger, the data writing processing is executed to the radio tag 7. After this, regardless of whether or not AGC parameters p in detecting IDs of other radio tags are "5" or larger, the data writing processing is not performed to those radio tags 7.

Therefore, according to the embodiment, since only the radio tag 7 in which the AGC parameter p in detecting ID is not smaller than the ACG threshold A in starting becomes effective, the data can be accurately written to a targeted radio tag positioned closest to the antenna 14.

There is a case where all the AGC parameters p in detecting the IDs of the radio tags 7 which have responded to the transmission of the ID interrogation radio wave are not larger than the AGC threshold A in starting. For instance, a case where the response sensitivities of the radio tags 7 themselves are poor is a possible one. In such a case, the maximum value among the AGC parameters p in detecting the IDs of the radio tags 7 is set as the current threshold value X. The ID interrogation radio wave is transmitted again. Since the forgoing processing is repeated within a range of the number of retry times, even when a radio tag 7 having bad response sensitivity has been used, the radio tag 7 positioned immediately near the antenna 14 is decided as the writing processing object and the data can be written therein.

The invention is not limited to the specific details and representative embodiments shown and described herein, and in an implementation phase, this invention may be embodied in various forms by modifying constituent elements without departing from the spirit or scope of the general inventive concept thereof.

While the embodiments have been described in which the memory 36 of the radio tag reader and writer 13 is provide with the memory areas 51, 52 of the AGC threshold A in starting and the minimum AGC threshold B, respectively, and the host device sets arbitrary values, the setting means of the AGC threshold A and the minimum AGC threshold B is not limited to the method mentioned above.

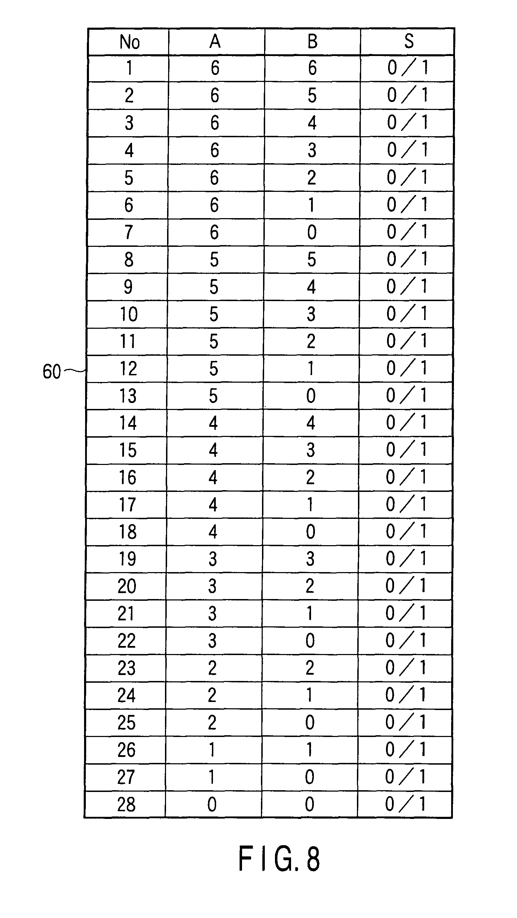

As shown in FIG. 8, storing the a threshold table 60 in which a plurality of combination patterns of the AGC thresholds A and the minimum AGC thresholds B are set in the memory 36 is a possible approach. In the threshold table 60, each "No." indicates the table number. Each "A" indicates an AGC threshold in starting, and each "B" indicates a minimum AGC threshold. Each "S" indicates a selection flag. Only the selection flag corresponding to one of patterns among a plurality of combination patterns is set to "1" indicating a selection state.

FIG. 8 shows a threshold table 60 in a case where each AGC parameter p is set to seven stages of "0" to "6". Since the AGC threshold A in starting is not smaller than the minimum AGC threshold value B, 28 combination patterns are set.

In a combination pattern of a table number "14", both the AGC threshold A and the minimum AGC threshold B are "4". In this case, the data writing processing is performed only for the radio tags having the AGC values Y of "4" or larger.

In a combination pattern of a table number "7", the AGC threshold A is "6", and the minimum AGC threshold B is "0". In this case, the data writing processing is solely performed for a radio tag having the maximum AGC value Y among radio tags existing in the communication area of the antenna 14.

The user inputs a table number in which the AGC threshold A and the minimum AGC threshold B have a desired combination pattern through the host device. Then, only the selection flag corresponding to the table number is set to "1", and all other selection flags come to "0". A combination pattern in which a selection flag S is set to "1" becomes effective to be processed.

In this way, using the threshold table 60 makes setting work for the AGC threshold value A and the minimum threshold AGC threshold B easy. A mistake such that a value larger than the AGC threshold A is set as the minimum AGC threshold B can be prevented.

While the embodiment has described a case in which the reception sensitivity in receiving tag identification information to be responded from the radio tag is detected from the value of the AGC parameter, the reception sensitivity may be detected on the basis of the information other than the AGC parameter.

The present invention is not limited to the radio reader and writher 13 of the radio tag label issuing device. For instance, the invention may be applied to a radio tag reader of a system which includes a gate-type antenna and recognizes an ID of a radio tag passing between the antennas. The reception sensitivity in detecting the ID of the radio tag passing between the antennas is extremely excellent. Thus, according to the invention, although the IDs of the radio tags existing near by the antenna are detected, the reception sensitivity of those radio tags is so bad that the radio tags are omitted, and only radio tags passing between the antennas of the gate-type antenna can be precisely detected.

It is explicitly stated that all features disclosed in the description and/or the claims are intended to be disclosed separately and independently from each other for the purpose of original disclosure as well as for the purpose of restricting the claimed invention independent of the composition of the features in the embodiments and/or the claims. It is explicitly stated that all value ranges or indications of groups of entities disclose every possible intermediate value or intermediate entity for the purpose of original disclosure as well as for the purpose of restricting the claimed invention, in particular as limits of value ranges.

## Claims

1. A radio communication device, **characterized by** comprising:
interrogation units (32, 33, 14) which are configured to interrogate tag identification information to a plurality of radio tags by radio communication;
reception units (14, 34) which are configured to receive tag identification information to be responded by the radio communication from the radio tags for the interrogation;
a detection unit (ST7) which is configured to detect reception sensitivity of the tag identification information received by the reception unit;
a comparison unit (ST8) which is configured to compare reception sensitivity detected by the detection unit with a prescribed threshold; and
a processing unit (ST9) which is configured to perform prescribed processing only for a primary radio tag of which the reception sensitivity is determined to be-not lower than the threshold by the comparison unit.

2. The radio communication device according to claim 1, **characterized by** further comprising:
a reception sensitivity storage unit (55) which is configured to store a reception sensitivity of radio tags of which the reception sensitivity is lower than the threshold by the comparison unit; and
a threshold update unit (ST16) which is configured to set the maximum vale of the reception sensitivity stored in the reception sensitivity storage unit as a new threshold, wherein:
when it is determined that the reception sensitivity in receiving tag identification information of all radio tags responding to one time interrogation is lower than the threshold, the radio communication device interrogates the tag identification information again to determine whether or not the reception sensitivity in receiving tag identification information of the responding radio tags is not lower than the new threshold updated by the threshold update unit, and performs the prescribed processing only for the primary radio tag of which the reception sensitivity is determined to be not lower than the new threshold.

3. The radio communication device according to claim 2, **characterized by** further comprising:
a lower limit value storage unit (52) which is configured to store a lower limit value of the threshold, wherein
the threshold update unit compares the maximum value of the reception sensitivity stored in the reception sensitivity storage unit with the lower limit value stored in the lower limit storage unit, and if the maximum value is larger than the lower limit value, the maximum value is set as a new threshold, and if the maximum value is not larger than the lower limit value, the lower limit value is set as a new threshold.

4. The radio communication device according to claim 1, **characterized by** further comprising:
a tag conveying unit (19) which is configured to convey radio tags in turn in a prescribed radio communication area; wherein
the processing unit performs data writing processing only for the primary radio tag of which the reception sensitivity is determined to be not lower than the threshold by the comparison unit among the radio tags to be carried in the radio communication area by the tag conveying unit.

5. The radio communication device according to claim 2, **characterized by** further comprising:
a tag conveying unit (19) which is configured to convey radio tags in turn in a prescribed radio communication area; wherein
the processing unit performs data writing processing only for the primary radio tag of which the reception sensitivity is determined to be not lower than the threshold by the comparison unit among the radio tags to be carried in the radio communication area by the tag conveying unit.

6. The radio communication device according to claim 3, **characterized by** further comprising:
a tag conveying unit (19) which is configured to convey radio tags in turn in a prescribed radio communication area; wherein
the processing unit performs data writing processing only for the primary radio tag of which the reception sensitivity is determined to be not lower than the threshold by the comparison unit among the radio tags to be carried in the radio communication area by the tag conveying unit.

7. A radio communication device, **characterized by** comprising:
interrogation means (32, 33, 14) for interrogating tag identification information to a plurality of radio tags by radio communication;
reception means (14, 34) for receiving tag identification information to be responded from the radio tags by the radio communication for the inquiries;
detection means (ST7) for detecting a reception sensitivity of the received tag identification information;
comparison means (ST8) for comparing the detected reception sensitivity with a prescribed threshold; and
processing means (ST9) for performing prescribed processing only for a primary radio tag of which the reception sensitivity is determined to be not lower than the threshold by the comparison means.

8. The radio communication device according to claim 7, **characterized by** further comprising:
reception sensitivity storage means (55) for storing the reception sensitivity of radio tags of which the reception sensitivity is lower than the threshold by the comparison means; and
threshold update means (ST16) for setting the maximum value of the reception sensitivity stored by the reception sensitivity storage means as a new threshold, wherein:
when it is determined that the reception sensitivity in receiving tag identification information of all radio tags responding to one time interrogation is lower than the threshold, the radio communication device interrogates the tag identification information again to determine whether or not the reception sensitivity in receiving tag identification information of the responding radio tags is not lower than the new threshold updated by the threshold update means, and performs the prescribed processing only for the primary radio tag of which the reception sensitivity is determined to be not lower than the new threshold.

9. The radio communication device according to claim 8, **characterized by** further comprising:
lower limit value storage means (52) for storing a lower limit value of the threshold, wherein
the threshold update means compares the maximum value of the reception sensitivity stored in the reception sensitivity storage means with the lower limit value stored in the lower limit storage means, and if the maximum value is larger than the lower limit value, the maximum value is set as a new threshold, and if the maximum value is not larger than the lower limit value, the lower limit value is set as a new threshold.

10. A control method of a radio communication device which interrogates tag identification information to a plurality of radio tags by radio communications and which performs prescribed processing for radio tags responding to the tag identification information, said control method **characterized by** comprising:
detecting a reception sensitivity in receiving the tag identification information to be responded from the radio tags;
comparing the detected reception sensitivity with a prescribed threshold; and
performing prescribed processing only for a primary radio tag of which the reception sensitivity is determined to be not lower than the threshold as a result of the comparison.

11. The control method of the radio communication device according to claim 10, **characterized by** further comprising:
storing the reception sensitivity of the radio tags of which the reception sensitivity is lower than the threshold as the result of the comparison; and
setting the maximum value of the stored reception sensitivity as a new threshold.

12. The control method of the radio communication device according to claim 11, **characterized by** further comprising:
comparing the maximum value of the stored reception sensitivity with a preset lower limit value;
setting the maximum value as a new threshold if the maximum value is larger than the lower limit value; and
setting the lower limit value as a new threshold if the maximum value is not larger than the lower limit value.
